# EUROPEAN PATENT APPLICATION

(11) **EP 3 445 090 A1**
(43) Date of publication of application: **20.02.2019**
(21) Application number: 17795858.4
(22) Date of filing: 31.03.2017
(51) Int. Cl.: H04W 36/12, H04W 76/20

(54) **COMMUNICATION METHOD**

(30) Priority: 11.05.2016 JP 2016095593
(71) Applicant: NTT Docomo, Inc., Tokyo 100-6150 (JP)
(72) Inventor: KAPTCHOUANG, Stephane, Tokyo 100-6150 (JP); IWASHINA, Shigeru, Tokyo 100-6150 (JP); SHIMIZU, Masayoshi, Tokyo 100-6150 (JP)
(74) Representative: Viering, Jentschura & Partner mbB Patent- und Rechtsanwälte
(86) International application number: PCT/JP2017/013625
(87) International publication number: WO 2017/195497

(57) **Abstract**

In a communication method, when a UE 10 transfers between cells having different gateway devices (PGW) corresponding thereto, first, a first PDN connection is handed over and is changed to a path passing through a base station device (eNB) of a cell as a transfer destination without changing the PGW, and then a second PDN connection passing through the base station device and the gateway device of the transfer destination is set up. After the second PDN connection has been set up, the first PDN connection is cut off.

## Description

### Technical Field

The invention relates to a communication method.

### Background Art

In the related art, when a user terminal transfers between cells in which it is located, a process of changing a route of a communication path via a base station device and a gateway device from the user terminal is performed. For example, Patent Literature 1 discloses a configuration for correcting a communication path which extends via a plurality of gateway devices due to transfer of the user terminal or the like.

### Citation List

### Patent Literature

Patent Literature 1: Republished Japanese Patent No. 2011/118196

### Summary of Invention

### Technical Problem

Recently, research has been conducted on decreasing a communication delay by disposing gateway devices which have been integrally disposed in a plurality of base station devices in a distributed manner. However, as described in Patent Literature 1, when movement of a user terminal is permitted while setting up a communication path via a plurality of gateway devices in accordance with movement of the user terminal, it is conceivable that a communication delay may increase. On the other hand, when it is intended to secure an appropriate communication path when transfer between cells requiring change of a gateway device occurs, resetting of a communication path is required and there is a likelihood that communication may be instantaneously cut off.

This invention has been realized in consideration of the above-mentioned circumstances and an objective thereof is to provide a communication method capable of continuously appropriately maintaining communication when a user terminal transfers between cells.

### Solution to Problem

In order to achieve the above-mentioned objective, according to an aspect of the invention, there is provided a communication method which is used for a user terminal to transfer from a cell subordinate to a first base station device to a cell subordinate to a second base station device in a communication system, the communication system including the user terminal, the first base station device and the second base station device that are included in a plurality of base station devices provided respectively in cells in which the user terminal is able to be located, a plurality of gateway devices that are devices that are correlated with the base station devices and control transmission and reception of data of the user terminal, and a connection control device that performs a process associated with setup and cutoff of a communication path which is set up between one gateway device of the plurality of gateway devices and the user terminal and which passes through one of the plurality of base station devices, the connection control device including a control information storage unit that stores information for identifying the gateway devices correlated with the base station devices, the user terminal having a first communication path to the gateway device correlated with the first base station device via the first base station device, the communication method including: a path change request receiving step of causing the connection control device to receive a request for changing the first communication path to a path passing through the second base station device from the first base station device; a gateway device determining step of causing the connection control device to determine whether the gateway device correlated with the second base station device matches the gateway device correlated with the first base station device with reference to the information stored in the control information storage unit; a first communication path changing step of causing the connection control device to change the first communication path to a path passing through the second base station device when it is determined in the gateway device determining step that the gateway device correlated with the second base station device does not match the gateway device correlated with the first base station device; a second communication path re-setup step of causing the connection control device to set up a second communication path passing through the second base station device between the user terminal and the gateway device correlated with the second base station device after the first communication path changing step; and a post-change first communication path cutoff step of causing the connection control device to cut off the first communication path after the second communication path re-setup step.

### Advantageous Effects of Invention

According to the invention, it is possible to provide a communication method capable of continuously appropriately maintaining communication when a user terminal transfers between cells.

### Brief Description of Drawings

FIG. 1 is a diagram schematically illustrating a configuration of a communication system in which a communication method according to an embodiment of the invention is executed.
FIG. 2 is a diagram illustrating a hardware configuration of devices included in the communication system.
FIG. 3 is a diagram illustrating functional blocks of an eNB and an MME.
FIG. 4 is a diagram schematically illustrating a first method.
FIG. 5 is a diagram illustrating an example of information which is used in the first method.
FIG. 6 is a sequence diagram illustrating the first method.
FIG. 7 is a diagram schematically illustrating a second method.
FIG. 8 is a sequence diagram illustrating the second method.
FIG. 9 is a sequence diagram illustrating the second method.

### Description of Embodiments

Hereinafter, an embodiment of the invention will be described in detail with reference to the accompanying drawings. In description with reference to the drawings, the same elements will be referred to by the same reference signs and description thereof will not be repeated.

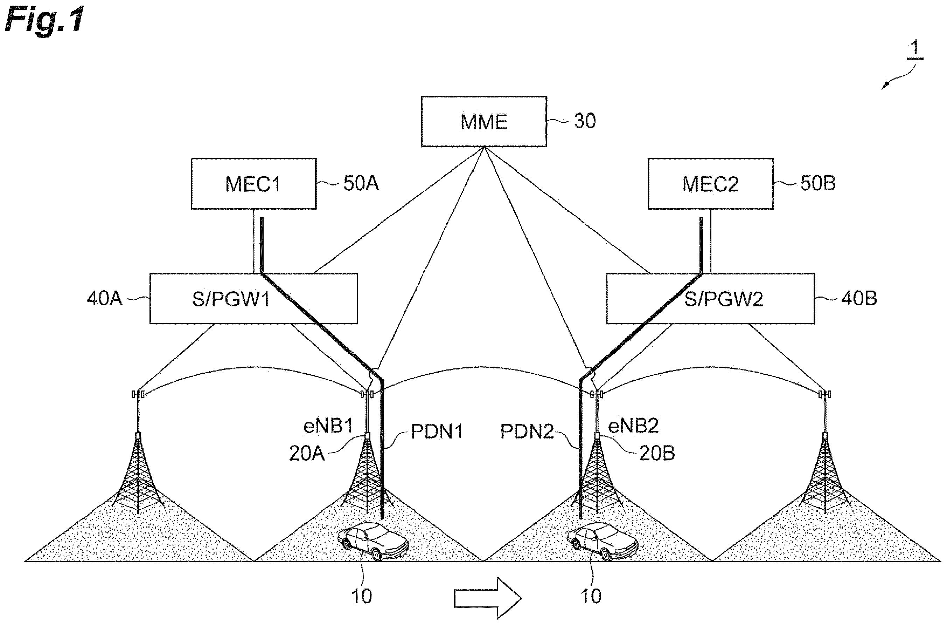

FIG. 1 is a diagram schematically illustrating a configuration of a communication system 1 in which a communication method according to an embodiment of the invention is executed. As illustrated in FIG. 1, the communication system 1 is a communication system that provides data communication such as VoLTE (Voice over LTE (Long Term Evolution)) to terminal devices on the basis of a communication standard (a communication protocol) of an LTE network. The communication system 1 includes a first eNB (eNodeB) 20A, a second eNB 20B, a mobility management entity (MME) 30, a first serving gateway/packet data gateway (S/PGW) 40A, a second S/PGW 40B, a first mobile edge computing (MEC) server 50A, and a second MEC server 50B. User equipment (UE) 10 (a user terminal) which is embodied by a smartphone, a tablet terminal, or the like communicates with the communication system 1 through communication access to the communication system 1. In FIG. 1, since the UE 10 moves by moving means, a vehicle is illustrated as the UE 10. In the drawing, the first eNB, the second eNB, the first S/PGW2, the second S/PGW, the first MEC server, and the second MEC server are denoted by eNB1, eNB2, S/PGW1, S/PGW2, MEC1, and MEC2, respectively.

The first eNB 20A (a first base station device), the second eNB 20B (a second base station device) are radio base stations connected to the MME 30 and are base station devices having a radio access control function. The first eNB 20A and the second eNB 20B manage cells in which the UE 10 can be located and have a reception control function when a call is transmitted from the UE 10 located in the corresponding cell and a paging function of calling the UE 10 when a call is transmitted from another UE 10 or the like to the UE 10 as basic functions.

The MME 30 (a communication control device) is a part that performs position management and authentication control of a UE 10 located in the network and a process of setting a communication path of user data between the first S/PGW 40A and the second S/PGW 40B and the eNB 20. The MME 30 stores information associated with the process of setting a communication path (a PDN connection) between the UE 10 subordinate to the eNB 20 and the first S/PGW 40A and the second S/PGW 40B and performs control associated with setup and cutoff of the PDN connection on the basis of path information. That is, the MME 30 serves as a connection control device in this embodiment.

The first S/PGW 40A and the second S/PGW 40B denote both an SGW and a PGW. An SGW serves as a switching device that transmits and receives user data to and from a PGW and is connected to a UE 10 to transmit and receive data to and from the UE 10. A PGW can be connected to a SGW 4 and serves as a gateway (a switching device) which is an access point to a packet network providing communication services such as a voice service and an Internet access service. In this embodiment, a PGW is referred to as a gateway device. Accordingly, an S/PGW in which an SGW and a PGW are integrated may be referred to as a gateway device. In this embodiment, an SGW and a PGW are together referred to as an S/PGW, but these devices may be separate from each other as in the related art. The MME, the SGW, and the PGW are nodes constituting an evolved packet core (EPC) in an LTE network.

In this embodiment, the first S/PGW 40A is connected to the first eNB 20A, and the second S/PGW 40B is connected to the second eNB 20B. That is, the first eNB 20A and the second eNB 20B are connected to different S/PGWs. In this embodiment, this state is mentioned that the first eNB 20A is correlated with the first S/PGW 40A and the second eNB 20B is correlated with the second S/PGW 40B.

The first MEC server 50A and the second MEC server 50B are service providing devices that are connected to the first S/PGW 40A and the second S/PGW 40B, respectively, and have a function of providing a service to a UE 10. Examples of the service which is provided by the MEC servers include automatic driving of a vehicle. In this embodiment, an MEC server is described as one service providing device, but the service providing device is not limited to the MEC.

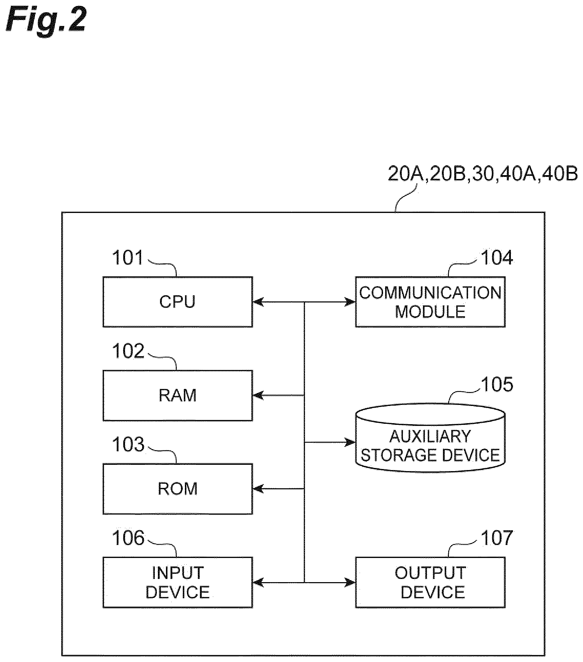

Each of the first eNB 20A, the second eNB 20B, the MME 30, the first S/PGW 40A, and the second S/PGW 40B which are illustrated in FIG. 1 may be configured as a computer system including a central processing unit (CPU) 101, a random access memory (RAM) 102 and a read only memory (ROM) 103 which are a main storage device, a communication module 104 which is a data transmitting/receiving device, an auxiliary storage device 105 such as a hard disk and a flash memory, an input device 106 such as a touch panel and a keyboard which are input devices, and an output device 107 such as a display as illustrated in FIG. 2. In the devices, the communication module 104, the input device 106, and the output device 107 are operated under the control of the CPU 101 by reading computer software to hardware such as the CPU 101 and the RAM 102 illustrated in FIG. 2, and a series of functions of the devices are embodied by reading and writing data from and to the RAM 102 and/or the auxiliary storage device 105. The block diagram illustrated in FIG. 2 represents blocks in units of functions. Such functional blocks (constituent elements) are embodied by arbitrary combination between hardware and/or software. Means for embodying the functional blocks is not particularly limited. That is, each functional block may be embodied by a single device which is physically and/or logically integrated, or may be embodied by two or more devices which are physically and/or logically separated by directly and/or indirectly connecting the two or more devices (for example, wiredly and/or wirelessly).

Each of the first eNB 20A, the second eNB 20B, the MME 30, the first S/PGW 40A, and the second S/PGW 40B may be configured to include hardware such as a micro-processor, a digital signal processor (DSP), an application specific integrated circuit (ASIC), a programmable logic device (PLD), and a field programmable gate array (FPGA), and some or all of the functional blocks may be embodied by the hardware. For example, each device may be mounted with at least one of the hardware.

Referring back to FIG. 1, connection of a UE 10 in the communication system 1 will be described below. When the UE 10 uses a service provided by an MEC server, a packet data network (PDN) connection (a communication path) for transmitting and receiving data is set up between the UE 10 and the MEC server (for example, the first MEC server 50A). A PDN connection is provided to reach an MEC server (for example, the first MEC server 50A) from the UE 10 via the eNB (for example, the first eNB 20A) and an S/PGW (for example, the first S/PGW 40A). The MME 30 serves to control a process associated with setup and cutoff of a PDN connection. The eNB has a function of requesting the MME 30 for change (handover) of a PDN connection corresponding to transfer between cells when the transfer between cells is required with movement of the UE 10.

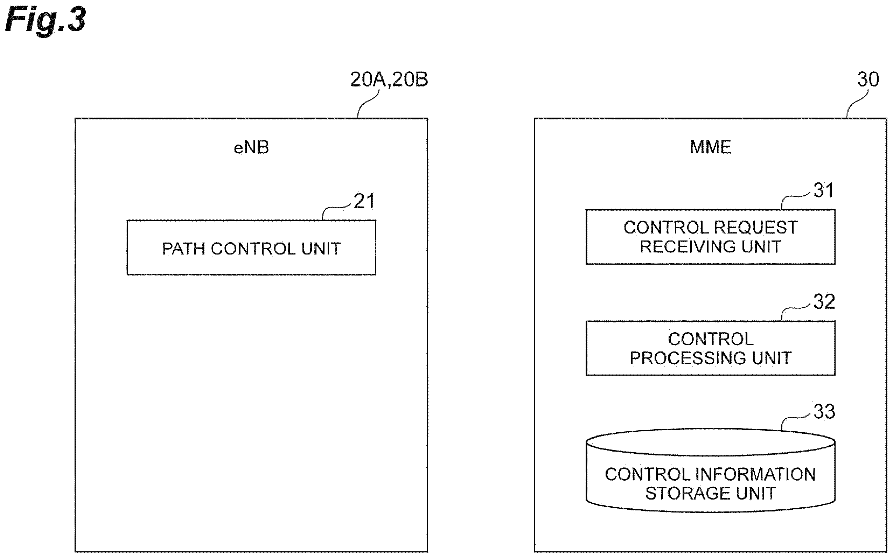

Accordingly, as illustrated in FIG. 3, the eNB (the first eNB 20A and the second eNB 20B) includes a path control unit 21 that performs monitoring and control associated with a PDN connection. The MME 30 includes a control request receiving unit 31 that receives a PDN connection change request or the like from the eNB, a control processing unit 32 that performs processes such as connection (setup), cutoff, and change of a PDN connection on the basis of a request from the eNB, and a control information storage unit 33 that stores information for performing setup of a PDN connection which is performed by the control processing unit 32. For example, information associated with an S/PGW connected to the UE 10 and information indicating a correlation between an S/PGW and a cell (eNB) are stored in the control information storage unit 33, and the information stored in the control information storage unit 33 will be described later.

A PDN connection is a communication path for transmitting and receiving user data between a UE 10 and a service providing device such as an MEC server. Here, when a PDN connection is set up, a control connection which is a control communication path for transmitting and receiving a control signal between the UE 10 and the MME 30 via the eNB is also set up. The control connection is connected to the MME 30 via the same eNB as the PDN connection. The control connection is a communication path that is set up between the UE 10 and the MME 30 via the eNB when the UE 10 is first attached to the network and of which setup is maintained while changing (handing over) an eNB through which the UE 10 passes along with movement of the UE 10.

In the communication system 1 according to this embodiment, it is assumed that an S/PGW is provided for every plural eNBs and a plurality of service providing devices are provided for each S/PGW. Specifically, as illustrated in FIG. 1, it is assumed that a plurality of eNBs including the first eNB 20A are provided to be subordinate to the first S/PGW 40A and the first S/PGW 40A is connected to the first MEC server 50A. it is also assumed that a plurality of eNBs including the second eNB 20B are provided to be subordinate to the second S/PGW 40B and the second S/PGW 40B is connected to the second MEC server 50B. In the related art, S/PGWs and MECs are often geographically integrated, for example, a plurality of eNBs are connected to one S/PGW, and there is a likelihood that a communication delay will occur because turnover of PDN connections often occurs. In the communication system 1 according to this embodiment, an attempt to curb a communication delay is carried out by distributing and disposing S/PGWs and service providing devices in order to cope with the problem with a delay in the related art.

Here, it is assumed that a UE 10 transfers from a cell subordinate to the first eNB 20A to a cell subordinate to the second eNB 20B. When S/PGWs are integrated as in the related art, handover is performed for the UE 10 to transfer between the cells. That is, a process of changing a base station device through which the UE passes while maintaining one PDN connection. On the other hand, when transfer in which an S/PGW (particularly, a PGW) corresponding to the eNB which has been used hitherto is changed like transfer of the UE 10 from the first eNB 20A to the second eNB 20B, it is necessary to cut off the PDN connection which has been used hitherto and to newly set up a PDN connection, that is, to re-set up the PDN connection. In the example illustrated in FIG. 1, when the UE 10 enjoys a service provided by a service providing device in the second eNB 20B as a transfer destination, it is necessary to cut off a first PDN connection (PDN1 in FIG. 1) on the first eNB 20A side and to set up a second PDN connection (PDN2 in FIG. 1) on the second eNB 20B side. In general, in re-setup of a PDN connection, a process such as cutoff and setup of a PDN connection has to be performed and there is a likelihood that a time in which the PDN connection cannot be used will increase and the process will be delayed. The delay in process may cause the UE not to appropriately enjoy the service from the service providing device.

Therefore, in the communication method in the communication system 1 according to this embodiment, there is provided a configuration for curbing a communication delay in the above-mentioned problem, that is, transfer between cells requiring for re-setup of a PDN connection, that is, transfer between base station devices having different gateway devices corresponding to the base station devices. That is, a configuration for reducing the time in which a PDN connection cannot be used and enabling the UE to appropriately enjoy the service from the service providing device is embodied by inventing a process associated with cutoff and setup of a PDN connection. In the following description, two methods which are communication methods including a technique for solving the above-mentioned problem will be described.

### (First method)

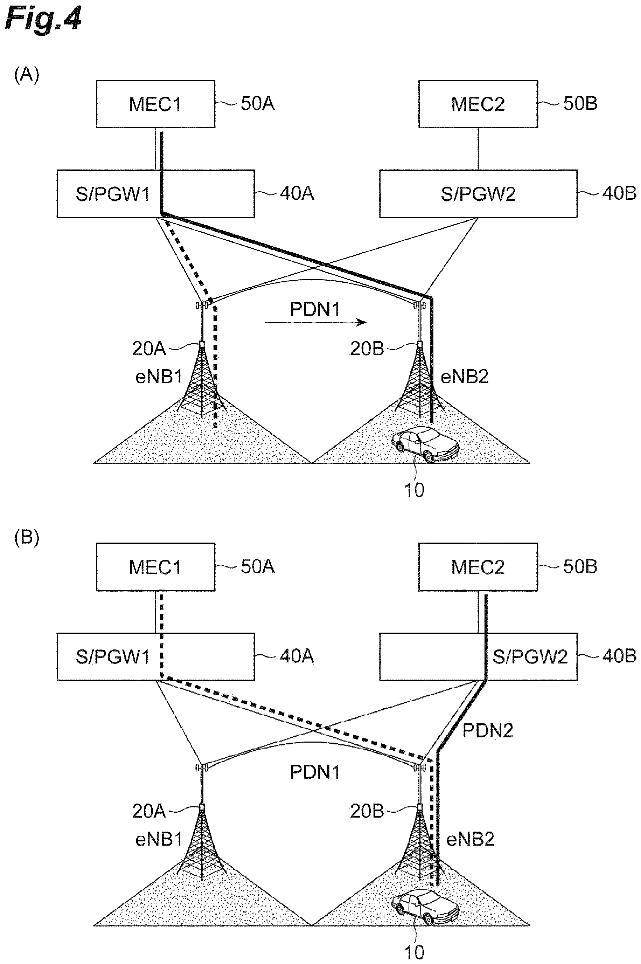

A first method in the communication method according to this embodiment will be schematically described below with reference to FIG. 4. The first method is a method of performing handover of a PDN connection which has been set up and setting up a new PDN connection in a state in which the PDN connection is maintained. The first method can be embodied by causing the first eNB 20A and the second eNB 20B to include an S1 interface for connection to a neighboring SGW (which corresponds to the second S/PGW 40B in the case of the first eNB 20A and which corresponds to the first S/PGW 40A in the case of the second eNB 20B) other than the SGW (for example, the first S/PGW 40A in the case of the first eNB 20A) connected thereto. S1 handover using the S1 interface is used in the first method. The first method is characterized in that determination associated with handover of a PDN connection and setup of a new PDN connection is performed by the MME.

Specifically, as illustrated in FIG. 4(A), when the UE 10 transfers from a cell subordinate to the first eNB 20A to a cell subordinate to the second eNB 20B, handover of the first PDN connection (PDN1) that connects the UE 10 to the first eNB 20A, the first S/PGW 40A, and the first MEC server 50A is performed. Thereafter, as illustrated in FIG. 4(B), a second PDN connection (PDN2) which is used in the cell as a transfer destination by the UE 10 is setup and then the first PDN connection is cut off.

In order to perform the process illustrated in FIG 4, when a handover request accompanied with transfer of the UE 10 is received from the first eNB 20A, the MME 30 needs to determine whether the S/PGW, that is, the PGW, corresponding to the eNB as a transfer destination matches the PGW set up before the transfer. That is, when the PGW corresponding to the eNB as the transfer destination is different from the PGW set up before the transfer, the process illustrated in FIG. 4, that is, re-setup of the PDN connection, is necessary.

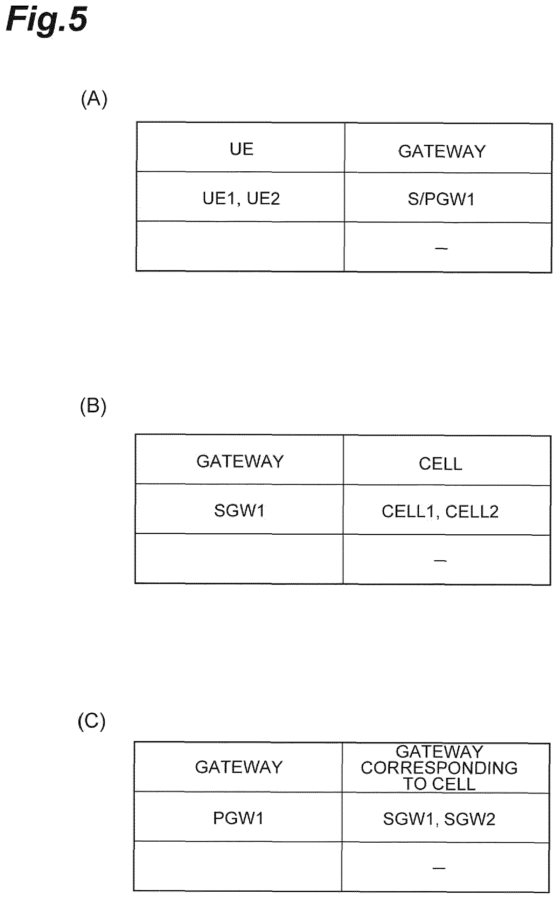

Accordingly, information illustrated in FIGS. 5(A) to 5(C) is stored in the control information storage unit 33 of the MME 30. FIG. 5(A) illustrates information for identifying a gateway device (S/PGW) connected to the UE, which is stored in correlation with information for identifying the UE. The S/PGW to which the UE is connected can be identified on the basis of the information illustrated in FIG. 5(A). FIG. 5(B) illustrates information indicating a correlation between the gateway devices and the cells, where information for identifying the gateway devices (here, information for identifying the SGWs) is correlated with information for identifying the cells (that is, information for identifying the eNBs). Since the MME 30 can identify the cell (eNB) as a transfer destination, the SGW corresponding to the eNB can be identified using the information illustrated in FIG. 5(B). FIG. 5(C) illustrates information indicating a correlation between the SGWs and the PGWs. In this embodiment, an SGW and a PGW are configured as a coupled device, but the SGWs and the PGWs may not actually have a one-to-one correspondence relationship. Accordingly, by storing the information illustrated in FIG. 5(C) as information for identifying the PGW corresponding to the SGW, the MME 30 can ascertain whether the PGW corresponding to the eNB as the transfer destination is changed with change of the eNB connected to the UE 10 with the transfer of the UE 10. When the PGW is changed, the process associated with re-setup of a PDN connection illustrated in FIG. 4 is performed.

In order to embody the first method, when a cell subordinate to an eNB corresponding to another S/PGW is present near, it is assumed that the eNB includes the S1 interface that can be connected to an SGW other than the SGW corresponding to the host device. Since the eNB includes the S1 interface, it is possible to perform handover of the first PDN connection when the UE 10 transfers to a cell subordinate to the eNB corresponding to the nearby S/PGW.

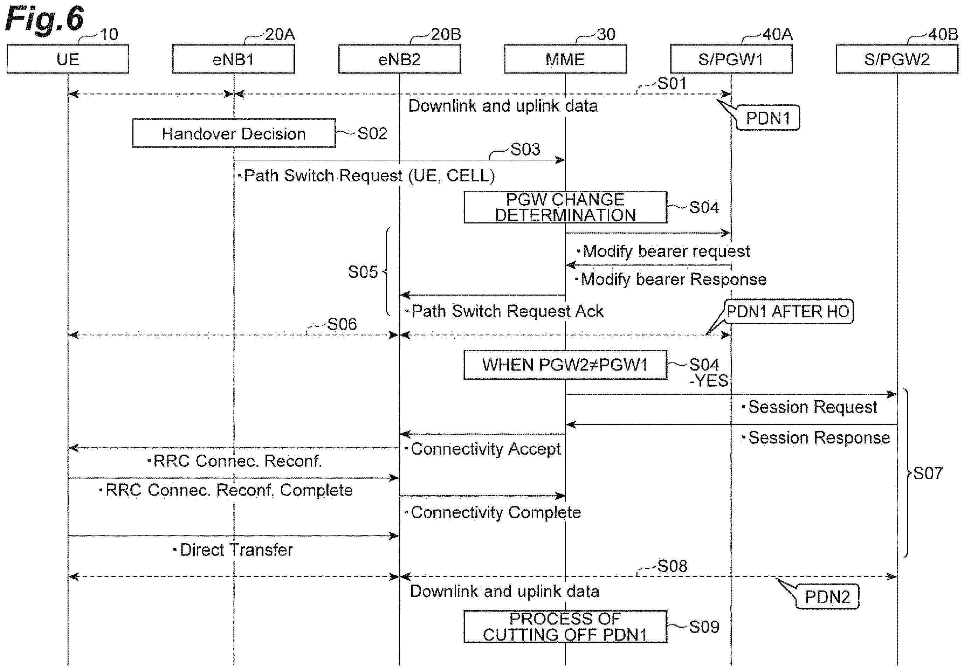

A process flow associated with the first method will be described below with reference to the sequence diagram illustrated in FIG. 6.

First, as illustrated in FIG. 4(A), it is assumed that the UE 10 is provided with a first PDN connection (PDN1) passing through the first eNB 20A and the first S/PGW 40A (S01). Then, it is assumed that the first eNB 20A determines that handover of the UE 10 is necessary as a result of communication quality measurement in the UE 10 or the like (Handover Decision: S02). At this time, a first PDN connection switch request (a handover request) is transmitted from the first eNB 20A to the MME 30 (Path Switch Request: S03: a path change request receiving step). The PDN connection change request (the handover request) includes information indicating a cell as a transfer destination of the UE 10 based on the result of communication quality measurement from the UE10.

When the control request receiving unit 31 of the MME 30 receives the request from the first eNB 20A, the control processing unit 32 determines whether the PGW corresponding to the eNB as the transfer destination of the UE 10 has to be changed, that is, whether the process associated with re-setup of the PDN connection is necessary, on the basis of the information associated with the cell as the transfer destination of the UE 10 transmitted from the first eNB 20A and the information stored in the control information storage unit 33 (S04: a gateway device determining step). Specifically, the MME 30 determines whether re-setup of the PDN connection is necessary on the basis of whether the PGW corresponding to the eNB of the cell as a handover destination matches the PGW corresponding to the eNB of the cell before the transfer on the basis of the information stored in the control information storage unit 33. It can also be considered that there are a plurality of PGWs corresponding to the eNB of the transfer destination of the UE 10. In this case, the MME 30 selects an appropriate PGW on the basis of a predetermined policy or the like.

In the first method, since handover itself of the first PDN connection is performed regardless of the determination result, a process associated with the handover is performed to pass through the second eNB 20B (S05: a first communication path changing step). The process associated with the handover is an existing process. As a result of handovers, the first PDN connection (PDN1) becomes a connection passing through the second eNB 20B and the first S/PGW 40A (S06). Handover of a control connection is performed at the same time as handover of the first PDN connection. Handover of a control connection is an existing process and thus detailed description thereof will not be made.

When it is determined that the process associated with re-setup is not necessary (S04: NO) as the result of determination (S04) of whether the process associated with re-setup of the PDN connection is necessary, the process flow ends. On the other hand, when it is determined that the process associated with re-setup is necessary (S04: YES) as the result of determination (S04) of whether the process associated with re-setup of the PDN connection is necessary, the following process is performed. When the PGW corresponding to the eNB of the cell as a handover destination does not match the PGW corresponding to the eNB of the cell before the transfer, a process of setting up a PDN connection passing through a new PGW is performed (S07: a second communication path re-setup step). Known techniques can be applied to the process associated with setup of the PDN connection. By completing the process associated with setup of the PDN connection, the second PDN connection (PDN2) passing through the second eNB 20B and the second S/PGW 40B is provided and transmission and reception of data using the second MEC server 50B is started (S08). Thereafter, the MME 30 performs a process of cutting off the first PDN connection (PDN1) (S09: a post-change first communication path cutoff step). The process of cutting off the first PDN connection is a known process.

Through the above-mentioned processes, the second PDN connection (PDN2) which has been newly set up is used in transmission and reception of data of the UE 10 after the UE 10 has transferred between the cells, and the first PDN connection (PDN1) is cut off.

In this way, with the first method of the communication method according to this embodiment, when the UE 10 transfers between the cells having different gateway devices (PGWs) correlated therewith, first, the first PDN connection is handed over and changed to a path passing through the base station device (the eNB) of the cell as the transfer destination without changing the PGW, and then the second PDN connection passing through the base station device and the gateway device of the transfer destination is set up. Then, after the second PDN connection has been set up, the first PDN connection is cut off. By employing this configuration, since the time in which communication is interrupted for switching from the first PDN connection to the second PDN connection can be reduced, it is possible to continuously more appropriately maintain communication between the UE 10 and the service providing device (the MEC server).

In order to realize the above-mentioned configuration, the MME 30 stores information of the gateway devices (PGWs) correlated with the base station devices (eNBs) in the control information storage unit 33. In the first method, since the MME 30 integrally stores information of the gateway devices (PGWs) correlated with the base station devices (eNBs), the MME 30 dominantly controls setup and cutoff of a communication path (a PDN connection).

A technique of causing the UE 10 to set up a plurality of PDN connections has been studied as a method of preventing the above-mentioned communication delay or the like. In the related art, a connection corresponding to the second PDN connection is set up in advance before the UE 10 transfers to the cell subordinate to the second eNB 20B, that is, in a state in which the UE 10 is located in the cell subordinate to the first eNB 20A. Then, the PDN connection to be used is handed over with the transfer of the UE 10. However, in this case, there is a problem in that a communication traffic volume associated with the PDN connections which have been set up in advance increases.

For example, in this embodiment, the UE 10 transfers from the cell subordinate to the first eNB 20A to the cell subordinate to the second eNB 20B, but there is actually a likelihood that a cell subordinate to the eNB corresponding to an S/PGW other than the second S/PGW 40B corresponding to the second eNB 20B will be present as a cell near the cell subordinate to the first eNB 20A. Here, when a path corresponding to the second PDN connection is set up in advance in a state in which the UE 10 is located in the cell subordinate to the first eNB 20A, the cell to which the UE 10 transfers cannot be known in advance and thus it is necessary to set up PDN connections corresponding to all the nearby cells in advance in order to continuously maintain communication. Accordingly, in some cases, it is necessary to set up two or more PDN connections in advance. When the UE 10 actually transfers over the cells, the process associated with handover of the PDN connections set up in advance and/or the process of cutting off unnecessary PDN connections and the like have to be performed and thus transmission and reception of control signals and the like also occur. In this way, when the configuration of setting up the PDN connection corresponding to the S/PGW of a transfer destination in advance is employed, it is conceived that a new problem with an increase in communication traffic volume occurs.

On the other hand, in the first method, the configuration of handing over the first PDN connection using the handover technique in the related art and then setting up the S/PGW corresponding to the eNB of the cell as the transfer destination if necessary instead of setting the second PDN connection in advance is employed. As a result, it is possible to curb a communication traffic volume for setting up the second PDN connection and to continuously more appropriately maintain communication between the UE 10 and the service providing device (the MEC server). The first method employs a configuration using knowledge that the MME 30 can identify an eNB of a transfer destination when a handover request associated with the UE 10 has been received from the eNB and knowledge that the MME 30 can identify the S/PGW corresponding to the eNB.

### (Second method)

A second method of the communication method according to this embodiment will be schematically described below with reference to the drawings. The first method is a method of first performing handover of a previously set-up PDN connection and then setting up a new PDN connection in a state in which the PDN connection is maintained, and is based on the premise that the eNB includes the S1 interface as described above. On the other hand, the second method uses dual connectivity in which a UE 10 is simultaneously connected to a plurality of base station devices to communicate therewith instead of using the S1 interface.

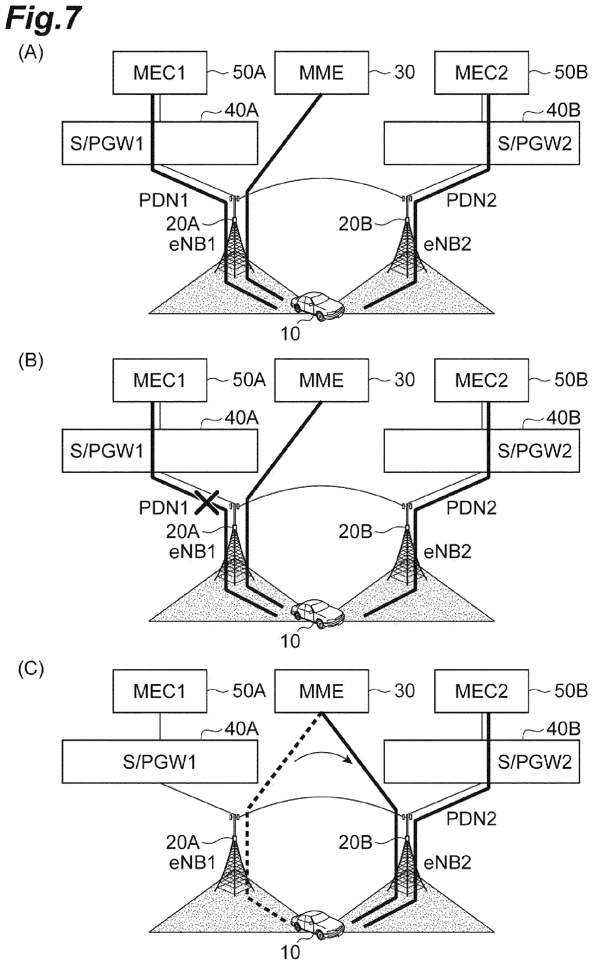

Specifically, as illustrated in FIG. 7(A), in a boundary when a UE 10 transfers from the cell subordinate to the first eNB 20A to the cell subordinate to the second eNB 20B, a second PDN connection (PDN2) passing through the second eNB 20B, the second S/PGW 40B, and the second MEC server 50B from the UE 10 is newly set up separately from a first PDN connection (PDN1) passing through the first eNB 20A, the first S/PGW 40A, and the first MEC server 50A from the UE 10. Then, as illustrated in FIG. 7(B), the first PDN connection is cut off. At this time, the control connection connecting the MME 30 to the first eNB 20A is maintained. Thereafter, as illustrated in FIG. 7(C), the control connection is handed over to a control connection having a path connecting the MME 30 to the second eNB 20AB.

In order to perform the process illustrated in FIG. 7, when the first eNB 20A has determined that handover of the UE 10 is necessary on the basis of communication quality information from the UE 10, information of the corresponding PGW is acquired from the eNB as a transfer destination and it is determined whether the information of the corresponding PGW matches information of the first eNB 20A when a handover request is transmitted to the eNB of the cell as the transfer destination. On the basis of the determination result, the second PDN connection is set up and two connections coexist if necessary, that is, when the PGW corresponding to the eNB of the transfer destination does not match the PGW corresponding to the first eNB 20A. That is, this method is based on the premise that the eNBs know the gateway devices corresponding to the base station devices. Only information illustrated in FIGS. 5(A) and 5(B) among information illustrated in FIGS. 5(A) to 5(C) is stored in the control information storage unit 33 of the MME 30. Since the eNB stores information of the gateway device corresponding thereto, the MME 30 does not need information corresponding to FIG. 5(C).

In the first method, handover of the control connection is performed at the same time as handover of the first PDN connection. However, in the second method, handover of the control connection is performed after the second PDN connection has been set up. That is, handover of the control connection is performed at a time other than the time of setup and cutoff of the PD connection.

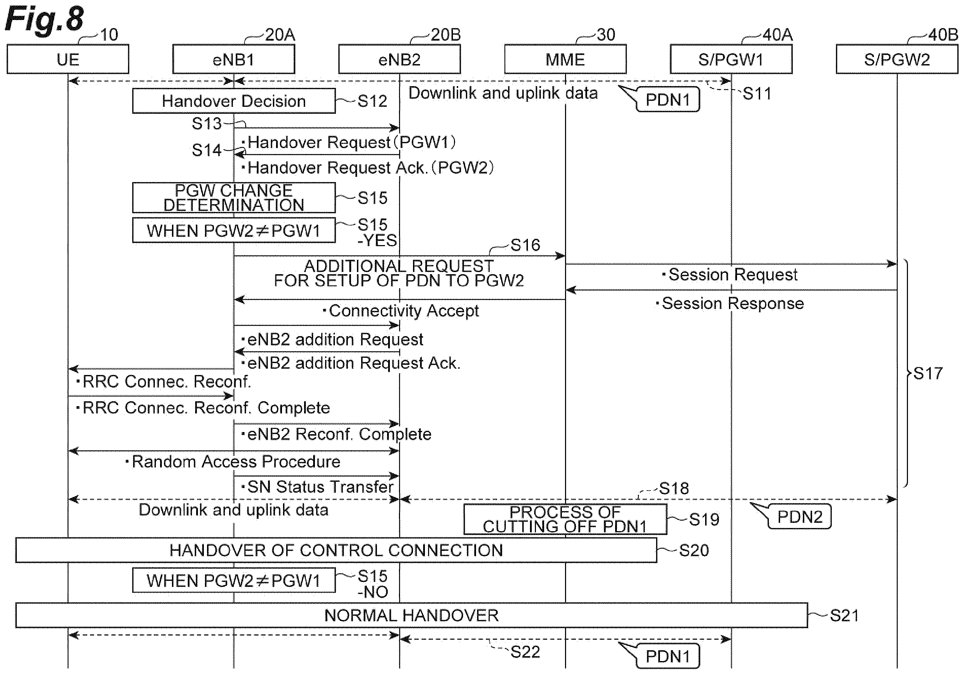

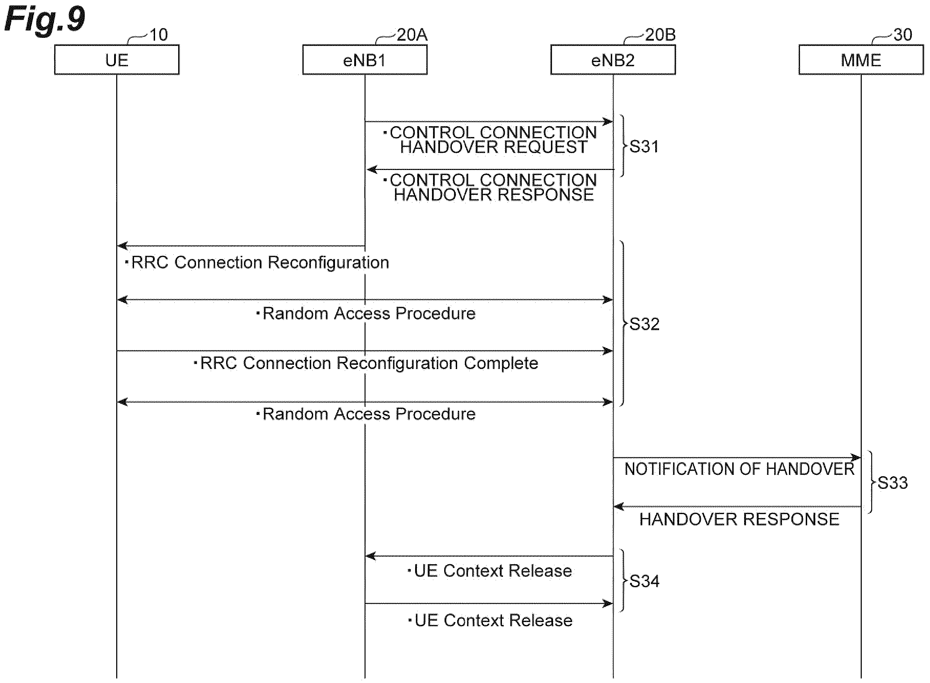

A series of process flows associated with the second method will be described below with reference to the sequence diagrams illustrated in FIGS. 8 and 9.

First, description will be performed with reference to FIG. 8. As illustrated in FIG. 7(A), it is assumed that a UE 10 sets up a first PDN connection (PDN1) passing through the first eNB 20A and the first S/PGW 40A (S11). Then, it is assumed that the first eNB 20A determines that handover of the UE 10 is necessary as a result of communication quality measurement in the UE 10 or the like (Handover Decision: S12). At this time, a first PDN connection switch request (a handover request) is transmitted from the first eNB 20A to the second eNB 20B as a transfer destination (Handover Request: S13: a control device information acquiring step). In the second method, it is assumed that handover of the PDN connection is performed on the basis of communication between the eNBs. Accordingly, the first eNB 20A identifies the cell as the transfer destination of the UE 10 on the basis of the result of communication quality measurement from the UE 10, and transmits a handover request to the second eNB 20B corresponding to the cell as the transfer destination. The first eNB 20A also transmits information for identifying the PGW which is the gateway device corresponding to the first eNB 20A to the second eNB 20B and requests the second eNB 20B to transmit information for identifying the corresponding PGW. Information for identifying the first eNB 20A may not be transmitted from the first eNB 20A to the second eNB 20B, but at least the first eNB 20A needs to acquire information for identifying the PGW corresponding to the second eNB 20B.

When the handover request is received from the first eNB 20A, the second eNB 20B responds to the handover request and returns information for identifying the PGW which is the gateway device corresponding to the second eNB 20B (S14: a control device information acquiring step). In this embodiment, information for identifying the second S/PGW 40B is transmitted.

Through this process, the first eNB 20A determines whether the PGW corresponding to the eNB as the transfer destination of the UE 10 has to be changed, that is, whether the process associated with re-setup of the PDN connection is necessary (S15: a corresponding device determining step). Specifically, it is determined whether re-setup of the PDN connection is necessary on the basis of whether the PGW corresponding to the second eNB 20B matches the PGW corresponding to the host device (the first eNB 20A) before the transfer on the basis of the information from the second eNB 20B.

When it is determined that the process associated with re-setup is necessary (S15: YES) as the determination result (S15) associated with whether the process associated with re-setup of the PDN connection is necessary, the following process is performed.

First, the path control unit 21 of the first eNB 20A transmits a request for adding a PDN connection of a path passing through the PGW corresponding to the second eNB 20B, that is, the second S/PGW 40B to the MME 30 (S16: a second communication path setup step). When the control request receiving unit 31 of the MME 30 receives the request for adding the PDN connection from the first eNB 20A, the control processing unit 32 performs a process of newly setting up a PDN connection passing through the second S/PGW 40B (S17: a second communication path setup step). Known techniques can be applied to the process itself associated with setup of the PDN connection. In a series of processes (S17) of connecting the PDN connection passing through the second S/PGW 40B which is illustrated in FIG. 8, the processes from "eNB2 addition Request" to "SN Status Transfer" are processes which are accompanied with execution of dual connectivity. When the process associated with setup of the PDN connection is completed, the second PDN connection (PDN2) passing through the second eNB 20B and the second S/PGW 40B is set up and transmission and reception of data using the second MEC server 50B is possible (S18). In this step, the path of the control connection has not been changed yet.

Thereafter, the MME 30 performs a process of cutting off the first PDN connection (PDN1) (S19: a first communication path cutoff step). The process of cutting off the first PDN connection is a known process. Then, a process associated with handover of the control connection is performed (S20: a control path changing step).

The process associated with handover of a control connection is illustrated in the sequence diagram of FIG. 9. Specifically, as illustrated in FIG. 9, notification associated with handover of a control connection is transmitted from the first eNB 20A to the second eNB 20B (S31), and then the process associated with setup of a control connection between the UE 10 and the second eNB 20B is performed by transmitting an instruction from the first eNB 20A to the UE 10 (S32). By transmitting notification associated with handover of a control connection from the second eNB 20B to the MME 30, a process of updating information stored in the MME 30 or the like is performed if necessary (S33). Thereafter, a signal associated with completion of handover is transmitted from the second eNB 20B to the first eNB 20A (S34), and handover of a control connection is completed. Known techniques can be applied as the process itself associated with the handover of a control connection.

Through the above-mentioned processes, the newly set-up second PDN connection (PDN2) is used in transmission and reception of data of the UE 10 having transferred between the cells, and the control connection is set up in a path passing through the second eNB 20B similarly to the second PDN connection.

When it is determined that the process associated with re-setup is not necessary (S15: NO) as the result of determination (S15) associated with whether the process associated with re-setup of the PDN connection in FIG. 8 is necessary, a normal process associated with handover is performed (S21). As a result, the first PDN connection (PDN1) is changed to a path passing through the UE 10, the second eNB 20B, and the first S/PGW 40A (S22).

In this way, with the second method of the communication method according to this embodiment, when the UE 10 transfers between the cells having different gateway devices (PGWs) correlated therewith, first, a second PDN connection passing through the base station device and the gateway device of the transfer destination is set up while maintaining the first PDN connection. Then, after the second PDN connection has been set up, the first PDN connection is cut off in a state in which the control connection is maintained. Thereafter, the control connection is handed over from a path corresponding to the first PDN connection to a path corresponding to the second PDN connection. By employing this configuration, since the time in which communication is interrupted for switching from the first PDN connection to the second PDN connection can be reduced, it is possible to continuously more appropriately maintain communication between the UE 10 and the service providing device (the MEC server).

In order to realize the above-mentioned configuration, the first eNB 20A and the second eNB 20B store information of the gateway devices (PGWs) correlated with the devices (the base station devices) and the stored information is transmitted and received between the eNBs. In the first method, the MME 30 integrally stores information of the gateway devices (PGWs) correlated with the base station devices (eNBs). However, in the second method, since the information of the gateway devices (PGWs) correlated with the base station devices is stored in the base station devices instead of integrally storing the information in the MME 30, the base station devices (eNBs) dominantly control setup and cutoff of a communication path (a PDN connection).

As described above, according to an aspect of the invention, there is provided a communication method which is used for a user terminal to transfer from a cell subordinate to a first base station device to a cell subordinate to a second base station device in a communication system, the communication system including the user terminal, the first base station device and the second base station device that are included in a plurality of base station devices provided respectively in cells in which the user terminal is able to be located, a plurality of gateway devices that are devices that are correlated with the base station devices and control transmission and reception of data of the user terminal, and a connection control device that performs a process associated with setup and cutoff of a communication path which is set up between one gateway device of the plurality of gateway devices and the user terminal and which passes through one of the plurality of base station devices, the connection control device including a control information storage unit that stores information for specifying the gateway devices correlated with the base station devices, the user terminal having a first communication path to the gateway device correlated with the first base station device via the first base station device, the communication method including: a path change request receiving step of causing the connection control device to receive a request for changing the first communication path to a path passing through the second base station device from the first base station device; a gateway device determining step of causing the connection control device to determine whether the gateway device correlated with the second base station device matches the gateway device correlated with the first base station device with reference to the information stored in the control information storage unit; a first communication path changing step of causing the connection control device to change the first communication path to a path passing through the second base station device when it is determined in the gateway device determining step that the gateway device correlated with the second base station device does not match the gateway device correlated with the first base station device; a second communication path re-setup step of causing the connection control device to set up a second communication path passing through the second base station device between the user terminal and the gateway device correlated with the second base station device after the first communication path changing step; and a post-change first communication path cutoff step of causing the connection control device to cut off the first communication path after the second communication path re-setup step.

With this communication method, when a user terminal transfers between cells having different gateway devices correlated therewith, first, the first communication path is changed to a path passing through the second base station device corresponding to the cell as a transfer destination without changing the gateway device. Thereafter, the second communication path passing through the second base station device as the transfer destination and the gateway device correlated with the second base station device is set up. After the second communication path has been set up, the first communication path is cut off. By employing this configuration, since the time in which communication is interrupted for switching from the first communication path to the second communication path can be reduced, it is possible to continuously more appropriately maintain communication when the user terminal transfers between the cells.

According to an aspect of the invention, there is provided a communication method which is used for a user terminal to transfer from a cell subordinate to a first base station device to a cell subordinate to a second base station device in a communication system, the communication system including the user terminal, the first base station device and the second base station device that are included in a plurality of base station devices provided respectively in cells in which the user terminal is able to be located, a plurality of gateway devices that are devices that are correlated with the base station devices and control transmission and reception of data of the user terminal, and a connection control device that performs a process associated with setup and cutoff of a communication path which is set up between one gateway device of the plurality of gateway devices and the user terminal and which passes through one of the plurality of base station devices, the first base station device and the second base station device storing information associated with the gateway devices correlated therewith, the user terminal having a first communication path to the gateway device correlated with the first base station device via the first base station device, the communication method including: a control device information acquiring step of causing the first base station device to acquire information for specifying the gateway device correlated with the second base station device from the second base station device; a corresponding device determining step of causing the first base station device to determine whether the gateway device correlated with the second base station device matches the gateway device correlated with the first base station device; a second communication path setup step of causing the connection control device to set up a second communication path passing through the second base station device between the user terminal and the gateway device correlated with the second base station device in a state in which the first communication path is maintained when it is determined in the corresponding device determining step that the gateway device correlated with the second base station device does not match the gateway device correlated with the first base station device; a first communication path cutoff step of causing the connection control device to cut off the first communication path in a state in which a control communication path corresponding to the first communication path is maintained after the second communication path setup step; and a control path changing step of causing the connection control device to change the control communication path to a path corresponding to the second communication path.

With this communication method, when a user terminal transfers between cells having different gateway devices correlated therewith, first, the second communication path passing through the base station device and the gateway device of the transfer destination is set up while maintaining the first communication path. After the second communication path has been set up, the first communication path is cut off in a state in which the control communication path is maintained. Thereafter, the control communication path is changed from a path corresponding to the first communication path to a path corresponding to the second communication path. By employing this configuration, since the time in which communication is interrupted for switching from the first communication path to the second communication path can be reduced, it is possible to continuously more appropriately maintain communication when the user terminal transfers between the cells.

The invention has been described above in detail with reference to the embodiments thereof. However, the invention is not limited to the embodiments. The invention can be modified in various forms as follows without departing from the gist thereof.

For example, each of the devices included in the communication system 1 described in the above-mentioned embodiment may be configured in combination of a plurality of devices. A plurality of devices included in the communication system 1 may be embodied by a single device.

Signal names which are used in the process of setting up and cutting off a communication path (a PDN connection) which has been described above in the embodiment are only examples. That is, in a series of processes associated with setup and cutoff of a communication path (a PDN connection), signals which are transmitted and received between the devices of the communication system 1 are not limited to those described in the embodiment. The order of processes may also be appropriately changed if necessary.

In the embodiment, the communication system 1 is a system based on a communication standard of an LTE network, but the communication method which is executed by the communication system according to the invention can be applied to networks of other wireless systems. In this case, the devices included in the communication system 1 described above in the embodiment can be replaced with devices corresponding to the wireless systems. The communication system 1 may correspond to a plurality of wireless systems. In this case, types of networks which can be controlled by a base station device may be partially different between the first base station device and the second base station device.

### (Others)

Transmission of information is not limited to the aspects/embodiments described in this specification, and may be performed using other methods. For example, the transmission of information may be performed by physical layer signaling (such as downlink control information (DCI) or uplink control information (UCI)), upper layer signaling (such as radio resource control (RRC) signaling, medium access control (MAC) signaling, or broadcast information (such as a master information block (MIB) and a system information block (SIB))), other signals, or combinations thereof. The RRC signaling may be referred to as an RRC message and may be referred to as, for example, an RRC connection setup message or an RRC connection reconfiguration message.

The aspects/embodiments described in this specification may be applied to systems employing long term evolution (LTE), LTE-advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), or other appropriate systems and/or next-generation systems to which these systems are extended on the basis thereof.

The order of the processing sequences, the sequences, the flowcharts, and the like of the aspects/embodiments described above in this specification may be changed as long as they are compatible with each other. For example, in the methods described in this specification, various steps as elements are described in an exemplary order but the methods are not limited to the described order.

A specific operation which is performed by a specific device in this specification may be performed by an upper node with respect thereto in some cases. In a network including one or more network nodes including a base station, for example, when the specific device is an eNB, various operations which are performed to communicate with a user terminal can be performed by the base station and/or other network nodes (for example, an MME or an S-GW can be conceived but the network nodes are not limited thereto) other than the base station. A case in which the number of network nodes other than the base station is one has been described above, but a combination of a plurality of different network nodes (for example, an MME and an S-GW) may be used.

Information or the like can be output from an upper layer (or a lower layer) to a lower layer (or an upper layer). Information or the like may be input or output via a plurality of network nodes.

The input or output information or the like may be stored in a specific place (for example, a memory) or may be managed in a management table. The input or output information or the like may be overwritten, updated, or added to. The output information or the like may be deleted. The input information or the like may be transmitted to another device.

Determination may be performed using a value (0 or 1) which is expressed by one bit, may be performed using a Boolean value (true or false), or may be performed by comparison of numerical values (for example, comparison thereof with a predetermined value).

The aspects/embodiments described in this specification may be used alone, may be used in combination, or may be switched during implementation thereof. Transmission of predetermined information (for example, transmission of "X") is not limited to explicit transmission, and may be performed by implicit transmission (for example, the predetermined information is not transmitted).

Regardless of whether it is called software, firmware, middleware, microcode, hardware description language, or another name, software can be widely construed to refer to commands, a command set, codes, code segments, program codes, a program, a sub-program, a software module, an application, a software application, a software package, a routine, a sub-routine, an object, an executable file, an execution thread, an order, a function, or the like.

Software, a command, and the like may be transmitted and received via a transmission medium. For example, when software is transmitted from a web site, a server, or another remote source using wired technology such as a coaxial cable, an optical fiber cable, a twisted-pair wire, or a digital subscriber line (DSL) and/or wireless technology such as infrared rays, radio waves, or microwaves, the wired technology and/or the wireless technology are included in the definition of a transmission medium.

"Information" described in this specification may be expressed using one of various different techniques. For example, data, an instruction, a command, information, a signal, a bit, a symbol, and a chip which can be mentioned in the overall description may be expressed by a voltage, a current, an electromagnetic wave, a magnetic field or magnetic particles, an optical field or photons, or an arbitrary combination thereof.

The terms described in this specification and/or the terms required for understanding this specification may be substituted by terms having the same or similar meanings.

The terms, "system" and "network," which are used in this specification are used interchangeably.

Information, parameters, and the like described in this specification may be expressed as absolute values, may be expressed by values relative to a predetermined value, or may be expressed by other corresponding information. For example, radio resources may be indicated by indices.

Names which are used for the parameters are not restrictive from any viewpoint. Expressions or the like using the parameters may be different from the expressions which are explicitly disclosed in this specification. Since various channels (for example, a PUCCH or a PDCCH) and information elements (for example, a TPC) can be distinguished by any appropriate name, various names given to various channels and information elements are not restrictive from any viewpoint.

A base station can cover one or more (for example, three) cells (also referred to as sectors). When a base station covers two or more cells, the entire coverage area of the base station can be partitioned into plural smaller subareas, and each sub area may provide a communication service using a base station subsystem (for example, an indoor small base station RRH (Remote Radio Head)). The term "cell" or "sector" refers to a base station that provides a communication service in the coverage and/or wholesome or all of base station subsystems. The terms "base station," "eNB," "cell," and "sector" can be used interchangeably in this specification. The base station eNB may also be referred to as a fixed station, a NodeB, an eNodeB (eNB), an access point, a femtocell, a small cell, or the like.

A user terminal which is a mobile communication terminal may also be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several appropriate terms by those skilled in the art.

The terms, "determining" and "determination," which are used in this specification may include various types of operation. The terms, "determining" and "determination," encompass judging, calculating, computing, processing, deriving, investigating, looking up (for example, looking up in a table, a database, or another data structure), and ascertaining. The terms, "determining" and "determination," encompass receiving (for example, receiving of information) and accessing (for example, accessing data in a memory). The terms, "determining" and "determination," encompass resolving, selecting, choosing, establishing, and comparing. That is, the terms, "determining" and "determination," encompass a certain operation which is considered to be "determined."

The terms, "connected" and "coupled," and all modifications thereof which are used in this specification refer to direct or indirect connection or coupling between two or more elements and can include that one or more intermediate element is present between two elements "connected" or "coupled" to each other. The coupling or connecting of elements may be physical, may be logical, or may be a combination thereof. In this specification, two elements can be considered to be "connected" or "coupled" to each other when one or more electrical wires, cables, and/or printed electric connections are used or by using electromagnetic energy such as electromagnetic energy having wavelengths in a radio frequency range, a microwave area, and a light (both visible light and invisible light) area as non-restrictive and non-comprehensive examples.

An expression "on the basis of -" which is used in this specification does not refer to only "on the basis of only ∼," unless otherwise described. In other words, the expression "on the basis of ∼" refers to both "on the basis of only ∼" and "on the basis of at least ∼."

When the terms "including" and "comprising" and modifications thereof are used in this specification or the appended claims, the terms are intended to have a comprehensive meaning similar to the term "having." A term "or" which is used in this specification or the claims is not intended to mean an exclusive logical sum.

In this specification, a single device may include plural devices unless only one device may be present due to the context or the technique.

The processing sequences, the sequences, the flowcharts, and the like of the aspects/embodiments described above in this specification may be changed in the order unless they are compatible with each other. For example, in the methods described in this specification, various steps as elements are described in an exemplary order but the methods are not limited to the described order.

The aspects described in this specification may be used alone, may be used in combination, or may be switched during implementation thereof. Transmission of predetermined information (for example, transmission of "X") is not limited to explicit transmission, and may be performed by implicit transmission (for example, the predetermined information is not transmitted).

Any reference to elements having names such as "first" and "second" which are used in this specification does not generally limit amounts or an order of the elements. The terms can be conveniently used to distinguish two or more elements in this specification. Accordingly, reference to first and second elements does not mean that only two elements are employed or that the first element has to precede the second element in any form.

In the entire disclosure, a singular form such as "a," "an," or "the" is intended to include the plural unless the context indicates otherwise. Accordingly, for example, when a "device" is mentioned, it should be understood that the device includes plural devices as well as a single device.

### Reference Signs List

1 Communication system
10 UE
20A First eNB
20B Second eNB
30 MME
40A First S/PGW
40B Second S/PGW
50A First MEC server
50B Second MEC server

## Claims

1. A communication method which is used for a user terminal to transfer from a cell subordinate to a first base station device to a cell subordinate to a second base station device in a communication system, the communication system including the user terminal, the first base station device and the second base station device that are included in a plurality of base station devices provided respectively in cells in which the user terminal is able to be located, a plurality of gateway devices that are devices that are correlated with the base station devices and control transmission and reception of data of the user terminal, and a connection control device that performs a process associated with setup and cutoff of a communication path which is set up between one gateway device of the plurality of gateway devices and the user terminal and which passes through one of the plurality of base station devices, the connection control device including a control information storage unit that stores information for specifying the gateway devices correlated with the base station devices, the user terminal having a first communication path to the gateway device correlated with the first base station device via the first base station device, the communication method comprising:
a path change request receiving step of causing the connection control device to receive a request for changing the first communication path to a path passing through the second base station device from the first base station device;
a gateway device determining step of causing the connection control device to determine whether the gateway device correlated with the second base station device matches the gateway device correlated with the first base station device with reference to the information stored in the control information storage unit;
a first communication path changing step of causing the connection control device to change the first communication path to a path passing through the second base station device when it is determined in the gateway device determining step that the gateway device correlated with the second base station device does not match the gateway device correlated with the first base station device;
a second communication path re-setup step of causing the connection control device to set up a second communication path passing through the second base station device between the user terminal and the gateway device correlated with the second base station device after the first communication path changing step; and
a post-change first communication path cutoff step of causing the connection control device to cut off the first communication path after the second communication path re-setup step.

2. A communication method which is used for a user terminal to transfer from a cell subordinate to a first base station device to a cell subordinate to a second base station device in a communication system, the communication system including the user terminal, the first base station device and the second base station device that are included in a plurality of base station devices provided respectively in cells in which the user terminal is able to be located, a plurality of gateway devices that are devices that are correlated with the base station devices and control transmission and reception of data of the user terminal, and a connection control device that performs a process associated with setup and cutoff of a communication path which is set up between one gateway device of the plurality of gateway devices and the user terminal and which passes through one of the plurality of base station devices, the first base station device and the second base station device storing information associated with the gateway devices correlated therewith, the user terminal having a first communication path to the gateway device correlated with the first base station device via the first base station device, the communication method comprising:
a control device information acquiring step of causing the first base station device to acquire information for identifying the gateway device correlated with the second base station device from the second base station device;
a corresponding device determining step of causing the first base station device to determine whether the gateway device correlated with the second base station device matches the gateway device correlated with the first base station device;
a second communication path setup step of causing the connection control device to set up a second communication path passing through the second base station device between the user terminal and the gateway device correlated with the second base station device in a state in which the first communication path is maintained when it is determined in the corresponding device determining step that the gateway device correlated with the second base station device does not match the gateway device correlated with the first base station device;
a first communication path cutoff step of causing the connection control device to cut off the first communication path in a state in which a control communication path corresponding to the first communication path is maintained after the second communication path setup step; and
a control path changing step of causing the connection control device to change the control communication path to a path corresponding to the second communication path.
